(19) Europäisches Patentamt
European Patent Office
Office européen des brevets

(11) **EP 2 871 696 A1**

(12) **EUROPEAN PATENT APPLICATION**
published in accordance with Art. 153(4) EPC

(43) Date of publication:
**13.05.2015 Bulletin 2015/20**

(51) Int Cl.:
*H01M 4/58* (2010.01)   *H01M 4/36* (2006.01)
*H01M 4/505* (2010.01)   *H01M 4/525* (2010.01)
*H01M 10/052* (2010.01)   *H01M 10/0566* (2010.01)

(21) Application number: 13813466.3

(22) Date of filing: 08.04.2013

(86) International application number:
**PCT/JP2013/060617**

(87) International publication number:
**WO 2014/006948 (09.01.2014 Gazette 2014/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.07.2012 JP 2012150115**

(71) Applicants:
• **Fuji Jukogyo Kabushiki Kaisha**
**Shibuya-ku**
**Tokyo**
**Tokyo 1508554 (JP)**

• **Nippon Chemical Industrial Co., Ltd.**
**Koto-ku, Tokyo 136-8515 (JP)**

(72) Inventors:
• **YANAGITA Hideo**
**Tokyo 150-8554 (JP)**
• **TAKIMOTO Kazuki**
**Tokyo 150-8554 (JP)**

(74) Representative: **Sajda, Wolf E. et al**
**Meissner, Bolte & Partner GbR**
**Postfach 86 06 24**
**81633 München (DE)**

(54) **NONAQUEOUS-SOLVENT TYPE ELECTRICITY STORAGE DEVICE**

(57)   It is intended to provide an electric storage device that has excellent charging characteristics, particularly at a low temperature. Hence, provided is a nonaqueous solvent-based electric storage device containing as positive electrode active materials, at least one of a lithium nickel aluminum complex oxides and a spinel-type lithium manganese oxide active material having $LiMn_2O_4$ as a basic structure, and lithium vanadium phosphate.

FIG. 1

EP 2 871 696 A1

**Description**

Technical Field

The present invention relates to a nonaqueous solvent-based electric storage device, such as a lithium-ion secondary battery, particularly, an electric storage device including $Li_3V_2(PO_4)_3$ as a positive electrode active material.

Background Art

Electric storage devices, such as a lithium-ion secondary battery, are recently used as a power source for electric devices and used also as a power source for electric vehicles (e.g. EV and HEV).

Such nonaqueous solvent-based electric storage devices are desired to have further improved properties such as improved energy density (large capacity), improved power density (large output), improved cycle characteristics (improved cycle life), and enhanced safety

Currently, most of lithium-ion secondary batteries, one of the examples of the nonaqueous solvent-based electric storage devices, are used for small-sized electric devices or the like.

Therein, $LiCo_{1-x-y}Ml_xM2_yO_2$ (M1 and M2 represent predetermined metal elements) which has a crystalline structure same as $LiCoO_2$ and a material that has a spinel structure such as $LiMn_2O_4$ are used as a positive electrode active material. Accordingly, these materials fulfilled electric storage devices having large capacity and long life.

A positive-electrode material including a lithium complex oxide such as $LiCoO_2$, as a positive electrode active material also significantly decreases the capacity at a low temperature, in the same way as in lithium-ion secondary batteries including the other types of positive-electrode materials.

Accordingly, there is such a demand of developing a lithium-ion secondary battery, of which characteristic deterioration at a low temperature is avoided.

For example, Patent Literature 1 discloses a positive electrode material as an example, including $LiCoO_2$ as a positive electrode active material for improving the above-mentioned low-temperature characteristics.

In Patent Literature 1, there are disclosed a positive-electrode material including a first positive electrode active material such as $LiMn_{0.2}Ni_{0.6}Co_{0.2}O_2$, a second positive electrode active material such as $LiCoO_2$, and a third positive electrode active material expressed by $LiMn_2O_4$ and $Li_vFe_{1-w}M5_wPO_4$ in a predetermined ratio by mass.

Prior Art Literature

Patent Literature

Patent Literature 1: Japanese Patent No. 4 273 422

Summary of the Invention

Problems to be Solved by the Invention

In the positive-electrode material in the above Patent Literature 1, the active materials expressed by $LiMn_2O_4$ and $Li_vFe_{1-w}M5_wPO_4$ are added for the purpose of imparting good low-temperature characteristics to existing active material. Firstly, however, $LiMn_2O_4$ has a high absolute value of capacity density and characterized by a gentle rise of a charging potential curve.

Therefore, it is considered that $LiMn_2O_4$ itself probably does not affect the improvement of battery charging performance.

On the other hand, $Li_vFe_{1-w}M5_wPO_4$ has a flat potential curve at charging/discharging and exhibits excellent characteristics in charging/discharging performance at a low temperature. However, $Li_vFe_{1-w}M5_wPO_4$ has a low charging/discharging voltage of 3.3 V with reference to $Li/Li^+$ and significant potential steps appear when it is combined with an operation voltage of 3.7 V of lithium-nickel complex oxide species, or an operation voltage of 4.1 V of spinel-Mn species. Namely, a stable charging/discharging performance cannot be obtained by the above-discussed materials, which are not preferable.

Accordingly, the object of the present invention is to provide an electric storage device that has excellent charging characteristics in particular at a low temperature.

Means for Solving the Problem

In order to achieve the above object, the present invention provides a nonaqueous solvent-based electric storage device comprising a positive electrode having at least one positive electrode active material selected from the group consisting of a lithium nickel aluminum complex oxide and a spinel-type lithium manganese oxide having a basic structure $LiMn_2O_4$.

The present inventors of the present invention have found that the charging performance, in particular the charging performance at a low temperature of an electric storage device can be significantly improved by further adding lithium vanadium phosphate as a positive electrode active material component.

The lithium nickel aluminum complex oxide is a compound expressed by $LiNi_{1-a1-a2}Co_{a1}Al_{a2}O_2$ (a1+a2 < 1). In the formula, Co and Al are used in combination, as preferably selected metal elements or transition metal elements.

The spinel-type lithium manganese oxide is $LiMn_2O_4$, which retains the basic structure thereof even when deintercalation/intercalation of Li is carried out by charging/discharging the battery.

Moreover, in order to sufficiently improve the effect, i.e., low-temperature characteristics, it is preferable that lithium vanadium phosphate is contained in an amount of 5 % by mass or more, based on the total mass of the positive electrode active material.

On the other hand, it is preferable that the content of lithium vanadium phosphate is 80 % by mass or less, in order to prevent the deterioration of other characteristics such energy density of the entire positive electrode active material.

Effects of the Invention

According to the present invention, the charging performance of an electric storage device, in particular the charging performance at a low temperature is significantly improved by adding lithium vanadium phosphate as a further active material to a positive electrode active material containing a lithium nickel aluminum complex oxide and/or a spinel-type lithium manganese oxide having a basic structure of $LiMn_2O_4$.

Brief Description of the Drawings

FIG. 1    is a schematic cross-sectional view of an electric storage device (lithium-ion secondary battery) as an embodiment of the present invention.

FIG. 2    is a schematic cross-sectional view of the electric storage device (lithium-ion secondary battery)as an embodiment of the present invention.

FIG. 3    is a graph showing a relationship between LVP content and thixotropy index of the positive electrode active material.

Mode for Carrying out the Invention

Hereinafter, embodiments of the present invention are described in detail. The present invention relates to a technology regarding an electric storage device. Examples of the electric storage device include a lithium-ion secondary battery. As described below, in the electric storage device of the present invention may be obtained by appropriately combining the conventionally known technology without any special limitation, for the structures other than the positive electrode, unless the effect(s) of the present invention are impaired.

The electric storage device according to the present embodiment comprises a positive electrode having at least one positive electrode active material selected from the group consisting of a lithium nickel aluminum complex oxide and a spinel-type lithium manganese oxide having a basic structure $LiMn_2O_4$, and a NASICON type lithium vanadium phosphate (hereinafter, referred to as LVP) such as $Li_3V_2(PO_4)_3$.

Lithium nickel aluminum Complex Oxide

In the lithium nickel aluminum complex oxide according to the present embodiment, the Ni-site is substituted by a metal element which has an atomic number of 11 or more and is different from Ni.

A metal element which has an atomic number of 11 or more and is different from Ni is preferably selected from transition metal elements, and examples thereof include at least Al.

Since the transition element may have a plurality of oxidation numbers, similar to Ni, it is possible to use ranges of the oxidation-reduction potential in the lithium nickel aluminum complex oxide to maintain high-capacity characteristics.

The metal element which has an atomic number of 11 or more and is different from Ni is, for example, Co, Mn, Al and Mg, and preferably Co and Al. With Ni being partially substituted by other metal elements, the ratio of Ni element in the lithium nickel aluminum complex oxide is, for example, preferably 0.3 to 0.8 mol, and more preferably 0.5 to 0.8 mol, based on 1 mol of the lithium atoms. The greater the ratio of the Ni element within the above range, the more the suppressing effect of vanadium elution from LVP.

Specifically, when 0.5 mol or more of the Ni element is contained, based on 1 mol of the lithium atoms, the capacity retention ratio is significantly improved by its vanadium-elution-suppressing effect.

The lithium nickel aluminum complex oxide may be manufactured by any method, without special limitation. For example, the lithium nickel aluminum complex oxide can be manufactured by mixing a Ni-containing precursor which has been synthesized by solid-phase reaction method, coprecipitation method, sol-gel method or the like, with a lithium compound, in a desired stoichiometric ratio, and calcining the thus mixed materials under an air atmosphere.

The lithium nickel aluminum complex oxide may be generally obtained in the form of particles usually by crushing a calcined product or the like. The particle diameter is not specifically limited and a desired particle diameter may be used.

Since the particle diameter influences the stability or density of the lithium nickel aluminum complex oxide, it is preferable that the average particle diameter is 0.5 $\mu$m to 25 $\mu$m. When the average particle diameter is less than 0.5 $\mu$m, the surface area, which is brought into contact with the electrolytic solution, increases.

Accordingly, the stability of the lithium nickel aluminum complex oxide may be decreased. When the average particle diameter is more than 25 $\mu$m, the power may be decreased due to the reduction of density. When the average particle diameter is within the above range, it is possible to obtain an electric storage device with good stability and large power out-put.

It is more preferable that the average particle diameter of the lithium nickel aluminum complex oxide is in the range of 1 $\mu$m to 25 $\mu$m, and particularly preferable in the range of 1 $\mu$m to 10 $\mu$m. The average particle diameter is a value measured by use of a grain size distribution measuring apparatus in accordance with laser diffraction system (light scattering method).

Spinel-Type Lithium manganese oxide

The spinel-type lithium manganese oxide according to the present embodiment is an oxide having a basic structure of $LiMn_2O_4$. The spinel-type lithium manganese oxide may be manufactured by any method, without any special limitation. For example, the spinel-type lithium manganese oxide may be manufactured by solid-phase reaction method, coprecipitation method, sol-gel method, or the like.

Lithium vanadium phosphate (LVP)

In the present invention, lithium vanadium phosphate (LVP) represents a NASICON type lithium vanadium phosphate, for example, expressed by $Li_x V2_{-y}M_y(PO_4)_z$,
wherein M is a metal element which has an atomic number of 11 or more, for example, one or more species selected from the group consisting of Fe, Co, Mn, Cu, Zn, Al, Sn, B, Ga, Cr, V, Ti, Mg, Ca, Sr and Zr, and wherein x, y and z satisfy the following relations:

$$1 \leq x \leq 3;$$

$$0 \leq y < 2;$$

and

$$2 \leq z \leq 3.$$

The present invention is explained especially by referring to $Li_3V_2(PO_4)_3$ as a representative example of LVP. All LVP expressed by the above formula has the effect which is the same as that obtained by $Li_3V_2(PO_4)_3$.

In the present invention, LVP may be manufactured by any method and the manufacturing methods are not specifically limited. For example, LVP may be manufactured, for example, by mixing a lithium source such as LiOH and $LiOH \cdot H_2O$, a vanadium source such as $V_2O_5$ and $V_2O_3$, a phosphoric acid source such as $NH_4H_2PO_4$ and $(NH_4)_2HPO_4$, and so on with LVP, and carrying out the reaction and calcination. LVP may generally be obtained in the form of particles obtained by crushing the calcined product or the like.

It is preferable that the LVP particles are spherical or substantially spherical. The average diameter of primary particles of the LVP is 2.6 $\mu$m or less, and preferably in a range of 0.05 $\mu$m to 1.2 $\mu$m. If the average diameter of the primary particles is less than 0.05 μm, the stability of LVP may be lowered.

This is because the particle surface area of the particles which is to be contact with an electrolytic solution is excessively increased. If the average diameter of the primary particles exceeds 2.6 μm, the reactivity may be insufficient.

By setting the average diameter of primary particles of the LVP in the above range, the surface area of each of active material particles is increased so that the contact area with the electrolytic solution is also increased to make an electrode reaction happen more easily. Thereby, the rate characteristics of the lithium ion secondary battery are improved.

The average diameter of primary particles is a value obtained by observing the particles using a scanning electron microscope, measuring the diameter of 200 primary particles arbitrarily selected, and calculating the average of measured diameters.

By setting the average diameter of primary particles of the LVP in the above range, the LVP particles are uniformly heated, wherein the crystallization degree is improved and the crystalline structure having a small quantity of hetero phase is obtained.

The crystallization degree may vary depending on raw materials of the LVP and/or calcination conditions. When the crystallization degree is 98 % or more, the capacity characteristics and the cycle characteristics of the lithium ion secondary battery are improved.

The LVP grain size affects the density of LVP and/or the process performance such as coating/paint preparation. Thus, it is preferable that D50 in the grain size distribution of secondary particles of LVP is 0.5 μm to 25 μm. When D50 is less than 0.5 μm, the stability of LVP may be decreased due to excessively increased contact surface with the electrolytic solution. When D50 exceeds 25 μm, the power output may be decreased due to decrease in reaction efficiency. When D50 is within the above range, it is possible to obtain an electricity storage device with improved stability and large power output.

It is more preferable that D50 in the grain size distribution of secondary particles of LVP is 1 μm to 10 μm, and it is particularly preferable that D50 is 3 μm to 5 μm. D50 in the grain size distribution of secondary particles is a value that is measured by a grain size distribution measuring apparatus using a laser diffraction (light scattering) method.

LVP itself has a small electron conductivity. Therefore, it is preferable that surfaces of the LVP particles be coated with conductive carbon so as to improve the electron conductivity of LVP.

A coating of the conductive carbon onto LVP may be performed by various methods. For example, a further process is applicable, such as a process in which the conductive carbon (e.g. carbon black such as ketjen black, acetylene black and oil furnace black, and carbon nanotube) is applied after synthesizing LVP, or a process in which the conductive carbon itself or a reaction precursor of the conductive carbon is mixed during synthesizing LVP.

The reaction precursor of the conductive carbon used for forming a positive-electrode coating layer may be, for example, a natural polymer such as saccharide such as glucose, fructose, lactose, maltose or sucrose.

The LVP particles are coated with the conductive carbon in the range of 0.5 mass% to 2.4 mass%, preferably 0.6 mass% to 1.8 mass% with respect to the total mass of LVP, so as to have a desired electric conductivity as positive-electrode active material.

When the amount of the coating is less than 0.5 mass%, the electric conductivity is insufficient. When the amount of the coating exceeds 2.4 mass%, a side reaction by the conductive carbon is activated to reduce reliability.

When the average diameter of primary particles of LVP is 2.6 μm or less with the amount of conductive carbon to be used together being set as described above, the electric conductivity is imparted to the LVP which is an insulating material as it is. Consequently, the rate characteristics relating to the charge-discharge efficiency are improved.

Further, reduction in the capacity retention ratio can be suppressed even after repeated use of the lithium ion secondary battery. When LVP particles are coated with conductive carbon, the average diameter of primary particles of LVP may be considered as the average diameter of primary particles of an LVP-conductive carbon complex.

As an industrially effective manufacturing method of the LVP-conductive carbon complex, a manufacturing method can be used, which includes a step of obtaining a reaction precursor by spray-drying a reaction liquid (a) prepared by reacting a lithium source, a vanadium compound, a phosphorus source, and a conductive carbon material source that generates a carbon by a thermal decomposition thereof in water solvent, and a step of calcining the reaction precursor under an inert gas atmosphere or a reductive atmosphere.

By using the LVP-carbon complex as the positive-electrode active material, an electricity storage device having a large discharge capacity and excellent cycle characteristics is obtained.

As a method for preparing the above reaction 1 (a), for example, one of the following three methods (1) to (3) may be adopted.

(1) A method in which a vanadium compound, a phosphorus source, and a conductive carbon material source that generates carbon by thermal decomposition thereof are subjected to heat treatment, preferably at 60 °C to 100 °C in water solvent for the reaction. Thereafter, the liquid after the heat treatment is cooled down to room temperature, and a lithium source is added to the liquid for further reaction, to obtain the reaction liquid (a).

(2) A method in which a vanadium compound, a phosphorus source, and a conductive carbon material source that generates carbon by thermal decomposition thereof are subjected to heat treatment preferably at 60 °C to 100 °C in water solvent for a reaction. Then, a lithium source is added to the liquid after heat treatment, for a further reaction in a heated condition preferably at 60 °C to 100 °C, to obtain the reaction liquid (a).

(3) A method in which a lithium source, a vanadium compound, a phosphorus source, and a conductive carbon material source that generates carbon by thermal decomposition thereof are added into water solvent, for a reaction in a heated condition preferably at 60 °C to 100 °C, to obtain the reaction liquid (a).

The reaction liquid (a) obtained by the method (1) is in the form of a solution. On the other hand, the reaction liquid (a) obtained by the method (2) or (3) is a reaction liquid (a) including a precipitation product. If needed, the reaction liquid (a) including a precipitation product may be subjected to a wet-crushing process.

In the present invention, the method of obtaining the reaction liquid (a) by the method (3) is particularly preferable for manufacturing the LVP-conductive carbon complex, from such a view-point that the control of the diameter of primary particles is easy.

Specific examples of the manufacturing method using the reaction liquid obtained by the method (3) include:

a first step of mixing a lithium source, a pentavalent or tetravalent vanadium compound, a phosphorus source, and a conductive carbon material source that generates carbon by thermal decomposition thereof in water solvent to prepare an raw material mixture liquid;

a second step of heating the raw material mixture liquid preferably at 60 °C to 100 °C and performing a precipitation-forming reaction to obtain a reaction liquid (a) including a precipitation product;

a third step of subjecting wet-crushing the reaction liquid including the precipitation product by a media mill to obtain a slurry including a crushed product;

a fourth step of spray-drying the slurry including the crushed object to obtain a reaction precursor; and

a fifth step of calcining the reaction precursor under an inert gas atmosphere or a reductive atmosphere at a temperature from 600 °C to 1300 °C.

By using the LVP-carbon complex as positive-electrode active material, an electricity storage device having a large discharge capacity and excellent cycle characteristics can be obtained.

In the manufacturing method, the lithium source may be lithium carbonate, lithium hydroxide, lithium oxide, lithium nitrate or lithium salts of organic acid such as lithium oxalate. The lithium source may be a hydrate or an anhydride. Among the above listed lithium sources, lithium hydroxide has a high solubility to water and is hence preferable from the industrial point of view.

Examples of the vanadium compound are vanadium pentoxide, ammonium vanadate, and vanadium oxyoxalate. Among them, vanadium pentoxide is preferably used because of the availability at low cost and a reaction precursor having improved reactivity.

Examples of the phosphorus source include phosphoric acid, polyphosphoric acid, anhydrous phosphoric acid, ammonium dihydrogen phosphate, diammonium hydrogen phosphate, ammonium phosphate. Among them, phosphoric acid is preferably used because of the availability at low cost and a reaction precursor having improved reactivity.

The conductive carbon material source may be, for example, coal tar pitch from soft pitch to hard pitch; coal-derived heavy oil such as dry-distilled liquefaction oil; petroleum-based heavy oils including directly distilled heavy oils such as atmospheric residue and vacuum residue, crude oil, and decomposition heavy oil such as ethylene tar by-produced during a thermal decomposition process of naphtha and so on; aromatic hydrocarbons such as acenaphthylene, decacyclene, anthracene and phenanthrene; polyphenylenes such as phenazine, biphenyl and terphenyl; polyvinyl chloride; a water-soluble polymers such as polyvinyl alcohol, polyvinyl butyral and polyethylene glycol and insolubilized products thereof; nitrogen-containing polyacrylonitriles; organic polymers such as polypyrrole; organic polymers such as sulfur-containing polythiophene and polystyrene; natural polymers such as saccharides, e.g. glucose, fructose, lactose, maltose and sucrose; thermoplastic resins such as polyphenylene sulfide and polyphenylene oxide; and thermosetting resins such as phenol-formaldehyde resin and imide resin.

Among them, saccharides are preferable because of industrially availability at low cost In addition, an electricity storage device using the LVP-carbon complex obtained from saccharides as positive-electrode active material has a particularly remarkable discharging capacity and cycle characteristics. Accordingly, saccharides are preferably used.

In order to obtain the LVP-conductive carbon complex by using the reaction solution (a) of the above (1), the previously-discussed fourth and fifth steps may be performed after obtaining the reaction liquid (a) of the above (1). Moreover, in order to obtain the LVP-conductive carbon complex by using the reaction liquid (a) of the above (2), the previously-discussed third, fourth and fifth steps may be sequentially performed after the reaction liquid (a) of the above (2) being obtained.

Positive Electrode

The positive electrode for use in the present embodiment contains a lithium nickel aluminum complex oxide and/or a spinel-type lithium manganese oxide having a basic structure of $LiMn_2O_4$. Further, LVP is added to the positive electrode, as a component constituting the positive electrode active material. For other components, known materials are used. Specific example for preparing the positive will be described below.

A positive-electrode mixture layer is formed through a process including: formulating positive-electrode slurry by dispersing a mixture containing a positive-electrode active material, a binder, and a conductive auxiliary agent in a solvent; and applying the positive-electrode slurry to the positive-electrode collector and drying the same.

Pressing may be performed after drying. As a result, the positive-electrode mixture layer is pressed uniformly and firmly against the collector. The thickness of the positive-electrode mixture layer is 10 $\mu$m to 200 $\mu$m, and preferably 20 $\mu$m to 100 $\mu$m.

Examples of the binder used for forming the positive-electrode mixture layer are fluorine-based resins such as polyvinylidene fluoride, acryl-based binders, rubber-based binders such as SBR, thermoplastic resins such as polypropylene and polyethylene, and carboxymethyl cellulose.

The binder is preferably a fluorine-based resin or a thermoplastic resin, particularly preferably a fluorine-based resin, which is chemically and electrochemically stable in the non-aqueous electrolytic solution used in the electricity storage device of the present invention.

Examples of the fluorine-based resin include polyvinylidene fluoride, polytetrafluoroethylene, a vinylidene fluoride-trifluoroethylene copolymer, an ethylene-tetrafluoroethylene copolymer, and a propylene-tetrafluoroethylene copolymer. The amount of the binder is preferably 0.5 to 20 mass%, based on the positive-electrode active material.

The conductive auxiliary agent used for forming the positive-electrode mixture layer includes, for example, a conductive carbon such as ketjen black, metals such as copper, iron, silver, nickel, palladium, gold, platinum, indium, and tungsten, and conductive metal oxides such as indium oxide and tin oxide. The amount of the conductive auxiliary agent is preferably 1 to 30 mass% with respect to the positive-electrode active material.

The solvent used for forming the positive-electrode mixture layer may be water, isopropyl alcohol, N-methyl pyrrolidone, dimethylformamide or the like.

As long as the positive-electrode collector is a conductive base in which the surface thereof that comes in contact with the positive-electrode mixture layer has conductivity, any materials may be used as the positive-electrode collector.

For example, a conductive base made of a conductive material, such as metal, a conductive metal oxide, and conductive carbon, a non-conductive base the body of which is coated with the conductive material may be used as the positive-electrode collector.

It is preferable that the conductive material be copper, gold, aluminum, or an alloy of them, or conductive carbon. As the positive-electrode collector, an expand metal, a punching metal, a foil, a net, a foam or the like of the materials may be used.

For a porous body, the shape and the number of through-holes are not specifically limited and may be appropriately set within a range that does not impede the movement of lithium ion.

In the present embodiment, the amount of LVP to be used is 5 % by mass or more, based on the total mass of the positive electrode active material. In particular, it is preferable that the content is in the range of 5 % to 80 % by mass. When the content is less than 5 % by mass, the improvement of the charging characteristics at a low temperature is restrained to be small.

On the other hand, when the content is more than 80 % by mass, the coating liquid is less flowable in the course of coating the electrode for manufacturing the battery, due to the bulky powder characteristics of LVP. This would make it difficult to prepare the electrode in a stable condition.

For obtaining excellent cycle characteristics, it is preferable that the coating amount of the positive-electrode mixture layer is 4 to 20 mg/cm$^2$ and the porosity of the positive-electrode mixture layer is 35 % to 65 %. The "coating amount" means the amount for the positive-electrode mixture layer to be provided on a single side of the positive-electrode collector.

In the case of forming a positive-electrode mixture layer on both sides of the positive-electrode collector, each of the positive-electrode mixture layers on one surface and another surface is formed to have the coating amount within the above range.

Negative Electrode

In the present invention, the negative electrode can be made from known materials, without any special limitation. For example, a negative-electrode mixture layer is formed by: dispersing a mixture containing a typical negative-electrode active material and a binder in a solvent, to prepare a negative-electrode slurry; applying the negative-electrode slurry to a negative-electrode collector; and drying the same. For the binder, solvent, and the negative-electrode collector, materials which is the same as those for the afore-mentioned positive electrode can be used.

Examples of the negative-electrode active material include, for example, a lithium-based metal material, an intermetallic compound material of metal and lithium metal, a lithium compound, and a lithium intercalation carbon material.

The lithium-based metal material is, for example, metal lithium or a lithium alloy (for example, Li-Al alloy). The intermetallic compound material of metal and lithium metal is, for example, an intermetallic compound containing tin, silicon or the like. The lithium compound is, for example, lithium nitride.

Examples of the lithium intercalation carbon material include carbon-based materials such as graphite and a hardly graphitizable carbon material, and a polyacene-based material. The polyacene-based material is, for example, an insoluble and infusible PAS having a polyacene-based skeleton.

All of the lithium intercalation carbon materials are substances that can be reversibly doped with lithium ions. The thickness of the negative-electrode mixture layer is generally 10 $\mu$m to 200 $\mu$m, preferably 20 $\mu$m to 100 $\mu$m.

In the present invention, the coating amount of the negative-electrode mixture layer is appropriately chosen, with the coating amount of the positive-electrode mixture layer taken into account.

In general, in a lithium-ion secondary battery, the coating amounts are decided so as to design the positive electrode and the negative electrode having substantially the same capacities (mAh) with each other, in view of the capacity balance and the energy densities of the positive electrode and the negative electrode.

Therefore, the coating amount of the negative-electrode mixture layer is selected, depending on negative-electrode active material to be used, the capacity of positive electrode, and the like.

Nonaqueous Electrolytic Solution

For the non-aqueous electrolytic solution for use in the present invention, known materials can be used without any special limitation. For example, an electrolytic solution, which is obtained by dissolving a commonly used lithium salt as an electrolyte in an organic solvent, can be used, because of no electrolysis to be concerned about, and the stability of the lithium ion.

Example of the electrolyte include, for example, $CF_3SO_3Li$, $C_4F_9SO_8Li$, $(CF_3SO_2)_2NLi$, $(CF_3SO_2)_3CLi$, $LiBF_4$, $LiPF_6$, $LiClO_4$ and the mixtures of these.

Examples of the organic solvent are propylene carbonate, ethylene carbonate, butylene carbonate, dimethyl carbonate, diethyl carbonate, ethylmethyl carbonate, vinyl carbonate, trifluoromethylpropylene carbonate, 1,2-dimethoxy ethane, 1,2-diethoxy ethane, $\gamma$-butyrolactone, tetrahydrofuran, 1,3-dioxolane, 4-methyl-1,3-dioxolane, diethyl ether, sulfolane, methyl sulfolane, acetonitrile, propionitrile, and the mixed solvent of these.

The concentration of the electrolyte in the nonaqueous electrolytic solution is preferably 0.1 mol/L to 5.0 mol/L, and more preferably 0.5 mol/L to 3.0 mol/L.

The nonaqueous electrolytic solution can be in the form of a liquid, or a solid-state electrolyte or a polymer gel electrolyte, by mixing a plasticizer, a polymer or the like with each other.

Separator

As the separator for use in the present invention, known separators can be used without any specific limitation. Preferable examples of the separator include a porous material, which is durable to an electrolytic solution, a positive-electrode active material and a negative-electrode active material, and which has no electron conductivity having pores communicating with each other.

The porous material may be, for example, fabric cloth, non-woven fabric, a synthetic resin microporous membrane, and glass fibers. The synthetic resin microporous membrane is preferably used, and particularly, a polyolefin-based microporous membrane such as polyethylene or polypropylene is preferable, in the aspects of thickness, strength and resistance of the membrane.

Electric Storage Device

The electric storage device of the present invention includes the positive electrode containing the positive electrode active material, the negative electrode, and the nonaqueous electrolytic solution, which are described above.

The present invention will now be explained as to a lithium ion secondary battery as embodiments of the electric storage device of the present invention, with reference to the drawings.

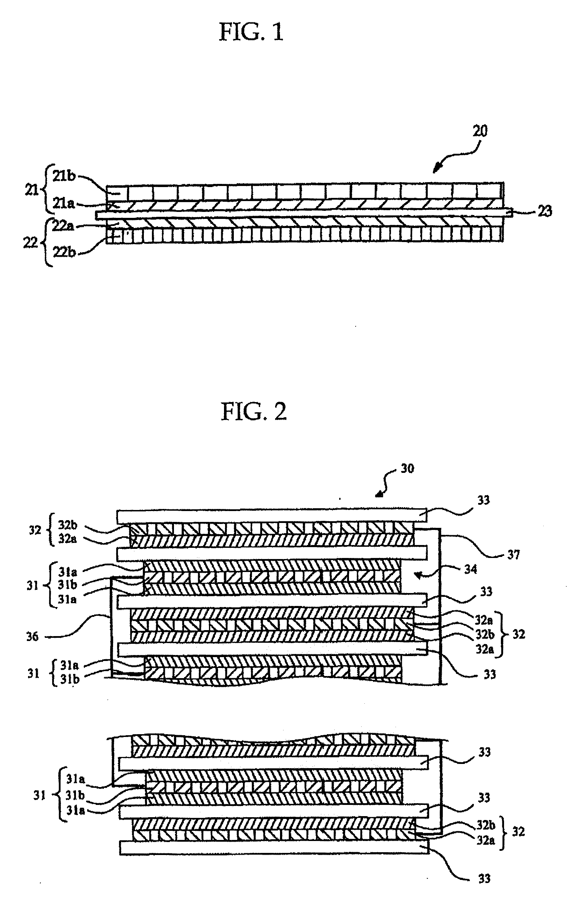

FIG. 1 is a schematic cross-sectional view of a lithium-ion secondary battery as an embodiment of the present invention. As shown in FIG. 1, a lithium-ion secondary battery 20 is composed of a positive electrode 21 and a negative electrode 22 that are arranged opposite to each other via a separator 23.

The positive electrode 21 is composed of a positive-electrode mixture layer 21a containing the positive electrode active material of the present invention, and a positive-electrode collector 21b. The positive-electrode mixture layer 21a is formed on the positive-electrode collector 21b on the side of the separator 23.

The negative electrode 22 is composed of a negative-electrode mixture layer 22a and a negative-electrode collector 22b. The negative-electrode mixture layer 22a is formed on the negative-electrode collector 22b on the side of the separator 23. The positive electrode 21, negative electrode 22, and separator 23 are sealed in an exterior container (not shown) and the exterior container is filled with a nonaqueous electrolytic solution.

Examples of materials for the exterior container include, for example, a battery can and a laminate film. A lead (not shown) for connecting an exterior terminal is connected to the positive-electrode collector 21b and the negative-electrode collector 22b, if necessary.

FIG. 2 is a schematic cross-sectional view of the lithium-ion secondary battery according to the present invention as another embodiments. As shown in FIG. 2, a lithium-ion secondary battery 30 includes an electrode unit 34 in which a plurality of positive electrodes 31 and negative electrodes 32 are alternatively stacked via separators 33. Each of the positive electrodes 31 is structured by disposing a positive-electrode mixture layer 31a on both sides of a positive-electrode collector 31b.

Each of the negative electrodes 32 is structured by disposing a negative-electrode mixture layer 32a on both sides of a negative-electrode collector 32b (however, in the uppermost and lowermost negative electrodes 32, the negative-electrode mixture layers 32a are formed only on one side).

Each of the positive-electrode collectors 31b has a protrusion (not shown). The protrusions of the plurality of positive-electrode collectors 31b are provided one on another, and leads 36 are welded to portions where the protrusions overlap with each other. Similarly, the negative-electrode collectors 32b have protrusions. Leads 37 are welded to the portions where the protrusions of the negative-electrode collectors 32b overlap with each other.

The lithium-ion secondary battery 30 is structured by including the electrode unit 34 and a nonaqueous electrolytic solution in an exterior container, such as a laminate film (not shown). The leads 36, 37 are exposed outside the exterior container for the connection with an external equipment.

Further, it is possible that the lithium-ion secondary battery 30 is provided with an lithium electrode in the exterior container, for lithium ion pre-dope lithium ion to the positive electrode, the negative electrode, or both the positive electrode and negative electrode.

In this case, through-holes extending in the stacking direction of the electrode unit 34 are formed in the positive-electrode collector 31b and the negative-electrode collector 32b, for improving the mobility of lithium ions.

In the above embodiment, the negative electrodes are disposed to the uppermost and the lowermost end of the lithium-ion secondary battery 30. The present invention is not limited to such configuration, and positive electrodes may be disposed to the uppermost and the lowermost ends.

EXAMPLES

Hereinafter, the invention is described with reference to Examples.

Example 1

(1-1) Making of LVP

First Step

2 L of ion-exchange water was poured in a 5 L beaker, and 605 g of 85 % phosphoric acid, 220 g of lithium hydroxide, 320 g of vanadium pentoxide, and 170 g of sucrose (sugar) were charged to the beaker. The thus obtained mixture was stirred at room temperature (25 °C), thereby obtaining an ocher-colored raw material mixture liquid.

Second Step

The raw material mixture liquid was heated with stirring at 95 °C for 1 hour for a precipitation reaction. Accordingly, a green reaction liquid including a precipitation product was obtained. The precipitation product was measured by a laser scattering/diffraction method (type 9320-X100 manufactured by NIKKISO CO., LTD.) and it was found that the average particle diameter of the product was 30 $\mu$m.

Third Step

After the reaction liquid was cooled, zirconia balls with a diameter of 0.5 mm were charged into a wet-crushing machine, and subjected to a crushing operation by beads-milling till the product in the reaction liquid having an average particle diameter ($D_{50}$) of 2.0 $\mu$m or less is obtained. Accordingly, a dispersion slurry was obtained.

Fourth Step

Subsequently, the dispersion slurry was charged into a spray-drying machine, wherein the temperature of the hot-air entrance was set to 230 °C and the temperature of the exit temperature was set to 120 °C, thereby a reaction precursor was obtained. The average particle diameter of secondary particles of the reaction precursor was 25 $\mu$m, obtained by the measurement by a SEM observation method was.

According to a powder X-ray diffraction measurement using Cu K$\alpha$-ray of the reaction precursor, a diffraction peak ($2\theta = 14°$) derived from lithium phosphate, a diffraction peak ($2\theta = 29°$) derived from vanadium hydrogen phosphate, and a diffraction peak of an unidentified crystalline compound were confirmed. Thus, the obtained reaction precursor was confirmed as a mixture including lithium phosphate, vanadium hydrogen phosphate and the unidentified crystalline compound.

For measuring the average particle diameter of the secondary particles of the reaction precursor, the followings were conducted: First, a SEM image of the secondary particles was subjected to an image analysis. The secondary particles were projected in 2 dimensions, 200 secondary particles were arbitrarily selected.

Thereafter, the particle diameters of the secondary particles selected were measured. Then, the particle diameters of the 200 secondary particles to obtain an average particle diameter of the secondary particles of the reaction precursor.

Fifth Step

The obtained reaction precursor was charged into a mullite sagger, and calcined at 900 °C in the atmosphere of nitrogen for 12 hours.

Crushing

The calcined product was crushed by a jet-milling machine to obtain a LVP (carbon complex) sample. The average primary particle diameter of the obtained LVP was 0.35 $\mu$m. Further, the mass and the carbon-coating amount of LVP were measured by TOC Total-Organic-Carbon analyzing machine (SHIMADZU Corporation, TOC-5000A), and it was found that the mass of carbon was 1.7 % (average value), based on the total mass of LVP.

(1-2) Preparation of Positive Electrode

The following materials for a positive-electrode mixture layer:

First active material component

($LiNi_{0.76}Co_{0.19}Al_{0.05}O_2$): 85 parts by mass;

Second active material component

($LiMn_2O_4$): 0 parts by mass;

Third active material component (LVP): 5 parts by mass;

Binder (polyvinylidene fluoride (PVdF)): 5 parts by mass; and
Conductive material (carbon black); 5 parts by mass; were mixed with:

100 parts by mass of a solvent (NMP), to obtain a positive-electrode slurry. A positive-electrode mixture layer was formed on a positive-electrode collector by applying the positive-electrode slurry on the positive-electrode collector, an aluminum foil (thickness of 30 $\mu$m), and drying the same.

The coating amount (per one side) of the positive-electrode mixture layer was 15 mg/cm$^2$. A coated portion (the portion where the positive-electrode mixture layer was formed) was cut into 50 mm x 50 mm pieces, while an uncoated portion of 10 mm x 10 mm was left as a tab for providing a lead thereon. The porosity of the positive-electrode mixture layer was 40 %, measured by a mercury porosimeter.

(2) Preparation of Negative Electrode

The following materials for a negative-electrode mixture layer:

Active material (graphite); 95 parts by mass;
Binder (PVdF); 5 parts by mass;

were mixed with 150 parts by mass of a solvent (NMP), thereby obtaining a negative-electrode slurry. A negative-electrode mixture layer was formed on a negative-electrode collector by applying the negative-electrode slurry on the negative-electrode collector, a copper foil (thickness of 10 μm), and drying the same. The coating amount (per one side) of the negative-electrode mixture layer was 7 mg/cm$^2$. A coated portion (the portion where the negative-electrode mixture layer was formed) was cut into 52 mm x 52 mm pieces, while an uncoated portion of 10 mm x 10 mm was left as a tab for providing a lead thereon.

(3) Preparation of Battery

A lithium-ion secondary battery shown as an embodiment in FIG. 2 was prepared by using nine sheets of the positive electrodes and ten sheets of the negative electrodes, which were made as described above.

Specifically, the positive electrodes and the negative electrodes were superimposed/stacked with one another via separators, and the periphery of the stacked material was fixed by a tape. The tabs of the positive-electrode collectors were overlapped and aluminum metal leads were provided thereon by welding.

Similarly, the tabs of the negative-electrode collectors were overlapped and nickel metal leads thereon by welding. The stacked material was introduced to an aluminum laminate exterior package/material with the positive-electrode leads and the negative-electrode leads taken out from the exterior material.

The exterior package was sealed by being fused, leaving an opening for an electrolytic solution injection without fused. An electrolytic solution was introduced from the electrolytic solution injection opening, the electrolytic solution was impregnated into the electrodes by vacuum impregnation, and then the laminate was vacuum-sealed.

(4) Test of Charging Performance

Charging performance was tested for the batteries prepared as described above. Specifically, the positive-electrode leads and negative-electrode leads were connected to corresponding terminals of a charging/discharging tester (manufactured by ASKA ELECTRONIC CO., LTD).

Constant-current charging was carried out at a maximum voltage of 4.2 V and a current rate of 2 C. After the charging was completed, discharge at constant current was performed to 2.5 V at a current rate of 0.2 C. The measurements were performed under environments of 25 °C, 0 °C and -10 °C.

The capacity, after the constant-current constant-voltage charging carried out at a maximum voltage of 4.2 V and a current rate of 0.2 C, and the discharge at constant current to 2.5 V at a current rate of 0.2 C after the completion of charging, was defined to be 100 %, and the evaluation was made. The charging rate was 89.3 % at 25 °C, 71.3 % at 0 °C, and 38 % at - 10 °C.

Examples 2 to 6

In Examples 2 to 6, batteries were prepared and evaluated under completely the same conditions as those of Example 1 except that the compositions of positive electrode active materials were used, as shown in Table 1. The charging rates at 25 °C, 0 °C and -10 °C are shown in Table 1.

Comparative Examples 1 and 2

Batteries were prepared and evaluated under completely the same conditions as those of Example 1 except that the compositions of positive electrode active materials were used, as shown in Table 1. The charging rates at 25 °C, 0 °C and -10 °C are shown in Table 1, respectively.

Table 1

| | | | Example 1 | Example 2 | Example 3 | Example 4 | Example 5 | Example 6 | Comparative Example 1 | Comparative Example 2 |
|---|---|---|---|---|---|---|---|---|---|---|
| Positive electrode | First active material (part by mass ) | $LiNi_{0.76}Co_{0.19}Al_{0.05}O_2$ | 85 | 75 | 60 | 0 | 0 | 0 | 90 | 0 |
| | Second active material (part by mass) | $LiMn_2O_4$ | 0 | 0 | 0 | 85 | 75 | 60 | 0 | 90 |
| | Third active material (part by mass) | LVP | 5 | 15 | 30 | 5 | 15 | 30 | 0 | 0 |
| | Binder (part by mass) | PVdF | 5 | 5 | 5 | 5 | 5 | 5 | 5 | 5 |
| | Conductive auxiliary agent (part by mass) | KB | 5 | 5 | 5 | 5 | 5 | 5 | 5 | 5 |
| Negative electrode | Active material (part by mass) | Graphite | 95 | 95 | 95 | 95 | 95 | 95 | 95 | 95 |
| | Binder (part by mass) | PVdF | 5 | 5 | 5 | 5 | 5 | 5 | 5 | 5 |
| Charging rate of constant current at 2 C at 25 °C | | | 89.3 % | 91.3 % | 92.0 % | 53.4 % | 58.2 % | 63.1 % | 85.6 % | 49.9 % |
| Charging rate of constant current at 2 C at 0 °C | | | 71.3 % | 73.4 % | 75.7 % | 35.1 % | 42.1 % | 48.6 % | 68.7 % | 10.3 % |
| Charging rate of constant current at 2 C at -10 °C | | | 38.0 % | 47.0 % | 59.2 % | 34.2 % | 38.1 % | 43.3 % | 0.7 % | 2.1 % |

As can be seen from the results in Table 1, all the electric storage devices wherein the positive electrode active materials in the Examples are used showed good charging characteristics, and in particular exhibit very good charging characteristics at a low temperature such as -10 °C.

In Examples 1 t 6, the combinations of the first to third active materials for the positive electrode active materials are different. More specifically, the first and third active materials are used in combination in Examples 1 to 3, and the second and third active materials are used in combination in Examples 4 to 6.

In all the Examples, the third active material (LVP) is added to a base active material(s) (the first or second active material) in the same way.

As described above, the batteries in Examples 1 to 6 wherein LVP is added showed significantly improved charging characteristics, compared with the batteries in Comparative Examples 1 and 2 wherein LVP is not added. Therefore, it is clear that charging characteristics have been improved by the addition of the third active material.

The following aspects are considered as reasons why the charging characteristics, particularly charging characteristics at low a temperature are improved by addition of LVP.

LVP has a large capacity of 120 to 130 mAh/g under a charging condition of 4.2 V, and has a flat potential curve in two potential states at around 3.6 V and around 4.1 V. Namely, a potential step is not to be formed even in combination with NCA or LMnO, whose operation voltage is about 4.1 V. Therefore, stable charging/discharging properties are attained.

Further, LVP has a NASICON type structure, wherein the special crystalline structure has vertexes of $VOP_6$ octahedron overlapped with those of $PO_4$ tetrahedron vertexes. Hence, large voids/spaces are contained in the crystalline structure. LVP has excellent Li-deintercalating/intercalating properties, resulting in a high Li ion conductivity.

It is known that a positive electrode active material itself should be formed as a thin layer for obtaining a good charging performance at a low temperature. In this case, however, there is the disadvantage that the energy density of the entire electrode containing the positive electrode active material would significantly be lowered.

In contrast, it is remarkable in the present, as shown in Examples 1 to 6, charging performance at a low temperature is improved without substantial decrease of energy density, by adding LVP as the third active material.

In addition, in order to sufficiently obtain the effect, i.e., the improvement of charging performance at a low temperature, it is preferable that the content of LVP is 5 parts by mass or more, based on the entire positive electrode active material.

On the other hand, it is known that LVP has excellent performance regarding Li ion deintercalation/intercalation properties, having a small electron conductivity. For improving the electron conductivity, conductive carbon is coated on the surface of a LVP particle.

As an effect therefrom, when the content of LVP is excessive (e.g., more than 80 parts by mass), the coating material becomes less flowable, which is due to the bulky powder performance. This would adversely affect the preparation of smooth electrode. Accordingly, the content of the third active material is preferably 80 parts by mass or less.

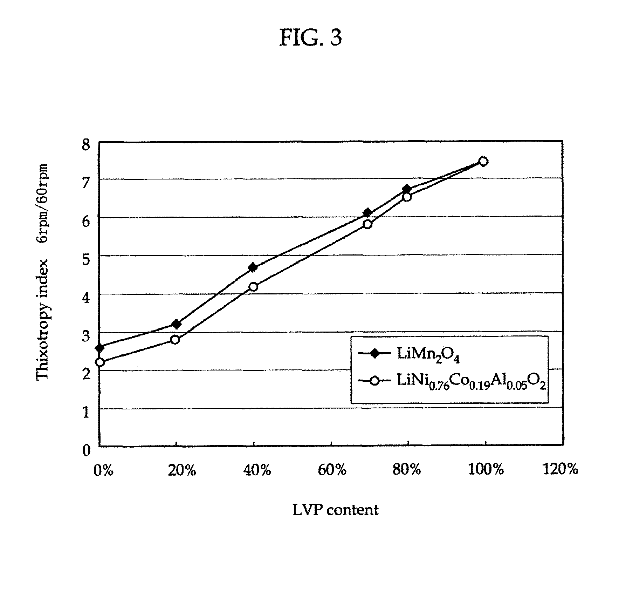

FIG. 3 shows measurement results of a thixotropy index, indicating the flowability of coating materials. The thixotropy index is an index to evaluate pseudoplastic flowability and was calculated as a ratio (quotient) of viscosity values at a rotation frequency of 6 rpm to 60 rpm measured by using B-type viscometer.

When the content of LVP was 100 %, the thixotropy index value was confirmed to be 7 or more. Such LVP has pseudoplastic flowability having a large viscosity value in a stand-still state and in a low-shear force application state.

Accordingly, the LVP exhibited mayonnaise-like physical properties, i.e., very low liquid-dripping properties for a short period of time. In order to obtain/maintain a uniform coating surface, it is desirable that the thixotropy index value be less than 7.

It should be noted that the present invention is not limited to the configurations of the above embodiments or the Examples. The invention may be modified in various ways within the scope of the invention. For example, the formulation of the first active material in the invention is not limited to that in the Examples, i.e., $LiNi_{0.76}Co_{0.19}Al_{0.05}O_2$, and any lithium nickel aluminum complex oxide, that is, any composition expressed by $LiNi_{1-x}M1_{a1}M2_{a2}M3_{a3}....Mn_{an}O_2$ (M1, M2, M3...Mn each represent a metal element which has an atomic number of 11 or more or a transition metal element, and one of them is Al; a1+a2+....+an = x, 0 < x < 1) may be adopted.

Further, in the above Examples, two components, i.e., the first active material component or the second active material component and the third active material component are mixed with each other to constitute the positive electrode active materials. Different from this, all of the first, second and third active material components may be mixed with each other to constitute a positive electrode active material.

Description of Symbols

20, 30        lithium-ion secondary battery

| 21, 31 | positive electrode |
| 21a, 31a | positive-electrode mixture layer |
| 21b, 31b | positive-electrode collector |
| 22, 32 | negative electrode |
| 22a, 32a | negative-electrode mixture layer |
| 22b, 32b | negative-electrode collector |
| 23, 33 | separator |
| 34 | electrode unit |
| 36, 37 | lead |

## Claims

1. A nonaqueous solvent-based electric storage device comprising :

   - a positive electrode including:
   - at least one positive electrode active material selected from the group consisting of a lithium nickel aluminum complex oxide and a spinel-type lithium manganese oxide having a basic structure $LiMn_2O_4$, and
   - lithium vanadium phosphate.

2. The nonaqueous solvent-based electric storage device according to claim 1, wherein lithium nickel aluminum complex oxide is

$$LiNi_{1-a1-a2}Co_{a1}Al_{a2}O_2 \ (a1 + a2 < 1).$$

3. The nonaqueous solvent-based electric storage device according to claim 1 or 2, wherein lithium vanadium phosphate is a material expressed by $Li_xV_{2-y}M_y(PO_4)z$, M is one or more element selected from the group consisting of Fe, Co, Mn, Cu, Zn, Al, Sn, B, Ga, Cr, V, Ti, Mg, Ca, Sr and Zr, and x, y and z satisfy the following relations

$$1 \leq x \leq 3;$$

$$0 \leq y < 2;$$

   and

$$2 \leq z \leq 3.$$

4. The nonaqueous solvent-based electric storage device according to any one of claims 1 to 3, wherein lithium vanadium phosphate is $Li_3V_2(PO_4)_3$, and contained in an amount of 5 % by mass or more, based on the entire mass of the positive electrode active material.

5. The nonaqueous solvent-based electric storage device according to any one of claims 1 to 4, wherein lithium vanadium phosphate is $Li_3V_2(PO_4)_3$, and contained in an amount of 80 by mass or less, based on the whole positive electrode active material.

6. The nonaqueous solvent-based electric storage device according to any one of claims 1 to 5, wherein lithium vanadium phosphate is in the form of particles and the surfaces of the particles are coated with conductive carbon.

7. The nonaqueous solvent-based electric storage device according to claim 6, wherein lithium vanadium phosphate has an average primary particle diameter of 2.6 $\mu$m or less, and the lithium vanadium phosphate particles are coated with the conductive carbon in an amount of 0.5 % to 2.4 % by mass, based on the total mass of lithium vanadium phosphate.

8. The electric storage device according to claim 6 or 7, wherein lithium vanadium phosphate which is coated with the conductive carbon is manufactured by a method, comprising the following steps:

- obtaining a reaction precursor by spray-drying a reaction liquid prepared by mixing a lithium source, a vanadium compound, a phosphorus source, and a conductive carbon material source that generates carbon by thermal decomposition thereof in an aqueous solvent; and
- calcining the reaction precursor under an inert gas atmosphere or a reductive atmosphere.

9. The electric storage device according to claim 6 or 7, wherein lithium vanadium phosphate which is coated with the conductive carbon is manufactured by a method comprising:

- a first step of mixing a lithium source, a vanadium compound, a phosphorus source, and a conductive carbon material source that generates carbon by thermal decomposition thereof in an aqueous solvent to prepare a raw material mixture liquid;
- a second step of heating the raw material mixture liquid and performing a precipitation reaction to obtain a reaction liquid comprising a precipitation product;
- a third step of wet-crushing the reaction liquid comprising the precipitation product by a media mill to obtain a slurry including a crushed product;
- a fourth step of spray-drying the slurry including the crushed product to obtain a reaction precursor; and
- a fifth step of calcining the reaction precursor under an inert gas atmosphere or a reductive atmosphere at a temperature from 600 °C to 1300 °C.

FIG. 1

FIG. 2

FIG. 3

## INTERNATIONAL SEARCH REPORT

| | International application No. |
|---|---|
| | PCT/JP2013/060617 |

**A. CLASSIFICATION OF SUBJECT MATTER**
*H01M4/58*(2010.01)i, *H01M4/36*(2006.01)i, *H01M4/505*(2010.01)i, *H01M4/525* (2010.01)i, *H01M10/052*(2010.01)i, *H01M10/0566*(2010.01)i

According to International Patent Classification (IPC) or to both national classification and IPC

**B. FIELDS SEARCHED**

Minimum documentation searched (classification system followed by classification symbols)
H01M4/58, H01M4/36, H01M4/505, H01M4/525, H01M10/052, H01M10/0566

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-198657 A (GS Yuasa International Ltd.), 06 October 2011 (06.10.2011), entire text (Family: none) | 1-9 |
| A | JP 2010-251060 A (Toyota Central Research and Development Laboratories, Inc.), 04 November 2010 (04.11.2010), entire text (Family: none) | 1-9 |
| A | JP 4273422 B2 (Sony Corp.), 03 June 2009 (03.06.2009), entire text & US 2006/0216601 A1 & CN 1832231 A | 1-9 |

| [X] | Further documents are listed in the continuation of Box C. | [ ] | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 June, 2013 (13.06.13) | 25 June, 2013 (25.06.13) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/060617

C (Continuation).    DOCUMENTS CONSIDERED TO BE RELEVANT

| Category* | Citation of document, with indication, where appropriate, of the relevant passages | Relevant to claim No. |
|---|---|---|
| P,X | JP 2012-256591 A  (Fuji Heavy Industries Ltd., The Nippon Chemical Industrial Co., Ltd.), 27 December 2012 (27.12.2012), claims; paragraphs [0001] to [0094], [0102] & US 2012/0295163 A1    & EP 2525427 A2 & CN 102790202 A | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4273422 B